# EUROPÄISCHE PATENTANMELDUNG

(11) **EP 4 803 241 A1**
(43) Veröffentlichungstag der Anmeldung: **09.09.2026**
(21) Anmeldenummer: 25162291.6
(22) Anmeldetag: 07.03.2025
(51) Int. Cl.: B23K 20/12

(54) **RÜHRREIBSCHWEISSWERKZEUG**

(71) Anmelder: Gühring KG, 72458 Albstadt (DE)
(72) Erfinder: HELBIG, Matthias, 72469 Meßstetten (DE)
(74) Vertreter: Winter, Brandl - Partnerschaft mbB

(57) **Zusammenfassung**

Es wird ein Rührreibschweißwerkzeug (1) bereitgestellt, das eine vorgegebene Drehrichtung hat und einen sich entlang einer Drehachse (3) erstreckenden Grundkörper (2) und einen von einer Schulter (4) am Grundkörper (2) axial vorspringenden konisch verjüngten Schweißstift (10) aufweist, dessen Mantelfläche durch abwechselnde konische Flächenabschnitte (16) und Abflachungen (14) und durch eine von einer Schweißstiftspitze (12) in Richtung der Schulter (4) mit einer zur Drehrichtung gegensinnig gewendelten Wendelnut (20) profiliert ist. Die Wendelnut (20) läuft in einem konischen Flächenabschnitt (16) der Mantelfläche des Schweißstifts (10) aus.

## Beschreibung

Die vorliegende Offenbarung betrifft ein Rührreibschweißwerkzeug, das eine vorgegebene Drehrichtung hat und einen sich entlang einer Drehachse erstreckenden Grundkörper und einen von einer Schulter am Grundkörper axial vorspringenden konisch verjüngten Schweißstift aufweist.

Das Rührreibschweißen (auch als Friction Stir Welding (FSW) bezeichnet) ist ein etabliertes Fügeverfahren, das unterhalb des Schmelzpunkts der zu verschweißenden Werkstücke arbeitet und insbesondere für das Schweißen von hochfesten Aluminiumlegierungen eingesetzt wird. Durch das Rührreibschweißen können zudem selbst schwer schweißbare oder artfremde Werkstoffe wie Aluminium mit Magnesium, Kupfer oder Stahl miteinander verschweißt werden.

Zur Erzeugung einer mittels Rührreibschweißen gebildeten Schweißnaht zwischen zwei Werkstücken wird ein rotierendes Rührreibschweißwerkzeug mit einer Schulter und einem von der Schulter auskragenden Schweißstift (auch als Schweißpin oder Pin bezeichnet) in eine Fügestelle der zu verbindenden Werkstücke eingetaucht und entlang der Fügestelle bewegt. Wärme, die durch Reibung zwischen dem Rührreibschweißwerkzeug, insbesondere der Schulter sowie dem Schweißstift, und den Werkstücken erzeugt wird, plastifiziert das Material der Werkstücke um den Schweißstift herum, sodass es unter der Werkzeugbewegung umgewälzt und verbunden wird.

Aus dem Stand der Technik sind verschiedene Rührreibschweißwerkzeuge bekannt, die hinsichtlich ihrer Geometrie und Materialeigenschaften für unterschiedliche Anwendungen optimiert sind. Insbesondere ist es bekannt, die Werkzeugschulter und/oder den Schweißstift mit einer beispielsweise nutförmigen Profilierung zu versehen. Das Schulterprofil beeinflusst maßgeblich die Reibwärmeerzeugung während des Rührreibschweißens. Eine auf der Schulter ausgebildete Nut kann ein seitliches Herauspressen von Material einschränken oder verhindern und aufgrund der im Vergleich zu einer flachen Schulter größeren Oberfläche einen größeren Wärmeeintrag bereitstellen. Zur Verbesserung des Materialflusses und Verringerung des Strömungswiderstands kann eine nutförmige Profilierung, z.B. eine Wendelnut, auf der Mantelfläche des Schweißstifts ausgebildet sein.

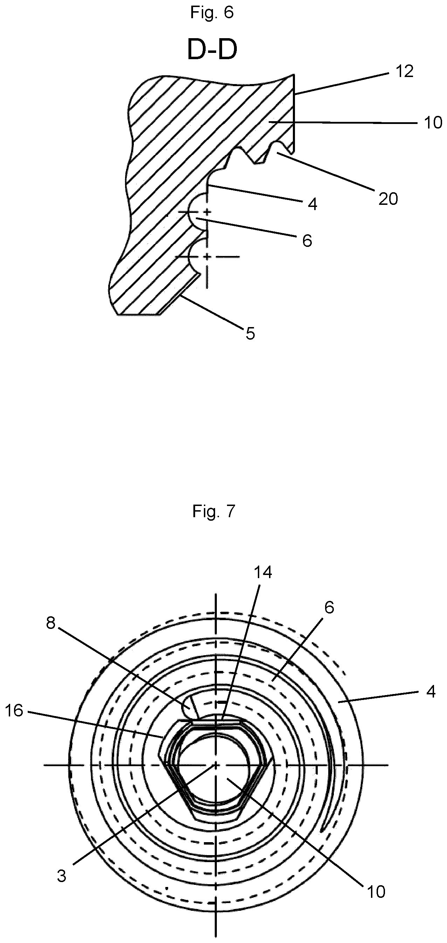

So offenbart die Druckschrift EP 3 122 510 B1 in den Figuren 7a und 7b einen Schweißstift eines Rührreibschweißwerkzeugs, dessen Mantelfläche durch abwechselnde konische Flächenabschnitte und Abflachungen gebildet ist. Der Schweißstift weist eine Wendelnut auf, die sich von einer Schweißstiftspitze in Richtung einer Schulter des Rührreibschweißwerkzeugs erstreckt. Wie insbesondere aus der Fig. 7b hervorgeht, läuft die Wendelnut im Bereich einer Abflachung aus.

Es besteht allgemein ein Bedarf, die Qualität der Schweißnaht beim Rührreibschweißen zu verbessern. Insbesondere sollen Verdichtungsfehler und Tunnelbildungen vermieden werden, die die mechanische Festigkeit der Schweißnaht reduzieren und potenziell für Rissbildungen oder vorzeitiges Versagen unter Belastung verantwortlich sein können. Verdichtungsfehler und Tunnelbildungen können durch unzureichende Materialverbindung oder unvollständige Durchmischung des plastifizierten Werkstoffs entstehen.

Ausgehend von dem aus der EP 3 122 510 B1 bekannten Rührreibschweißwerkzeug liegt der Offenbarung die Aufgabe zugrunde, ein Rührreibschweißwerkzeug zu schaffen, das Verdichtungsfehler und Tunnelbildungen bestmöglich vermeidet und eine beständige Schweißnaht mit hoher Qualität erzeugen kann.

Diese Aufgabe wird durch ein Rührreibschweißwerkzeug gemäß Anspruch 1 gelöst. Die Unteransprüche betreffen vorteilhafte Ausgestaltungen.

Ein Rührreibschweißwerkzeug kann eine vorgegebene Drehrichtung haben und einen sich entlang einer Drehachse erstreckenden Grundkörper und einen von einer Schulter am Grundkörper axial vorspringenden konisch verjüngten Schweißstift bzw. Schweißpin aufweisen, dessen Mantelfläche durch abwechselnde konische Flächenabschnitte und Abflachungen und durch eine von einer Schweißstiftspitze in Richtung der Schulter mit einer zur Drehrichtung gegensinnig gewendelten Wendelnut profiliert ist. Die Wendelnut kann in einem konischen Flächenabschnitt der Mantelfläche des Schweißstifts auslaufen.

Wenn das Rührreibschweißwerkzeug eine Drehrichtung nach rechts, d.h. von der Schweißstiftspitze in Richtung Schulter betrachtet eine Drehrichtung gegen den Uhrzeigersinn, hat, ist die Wendelnut, die sich in der Art eines Gewindes um den Schweißstift wendelt, linksgewendelt oder linksgängig, d.h. die Wendelnut wendelt sich von der Schweißstiftspitze in Richtung Schulter gegen den Uhrzeigersinn um den Schweißstift herum. Die zur Drehrichtung des Rührreibschweißwerkzeugs gegensinnige Wendelung der Wendelnut bewirkt, dass das plastifizierte Material von der Schulter in Richtung der Schweißstiftspitze gefördert bzw. verdrängt wird. Wenn das Rührreibschweißwerkzeug eine Drehrichtung nach links, d.h. von der Schweißstiftspitze in Richtung Schulter betrachtet eine Drehrichtung im Uhrzeigersinn, hat, ist die Wendelnut rechtsgewendelt oder rechtsgängig, d.h. die Wendelnut wendelt sich von der Schweißstiftspitze in Richtung Schulter im Uhrzeigersinn um den Schweißstift herum, um eine Materialbewegung von der Schulter in Richtung der Schweißstiftspitze zu erzeugen. Vorzugsweise erstreckt sich die Wendelnut dabei so nah wie möglich an die Schulter heran, um das von der Schulter plastifizierte Material aufnehmen und verdrängen zu können und insgesamt eine Materialbewegung in Richtung der Schweißstiftspitze zu erzeugen. Unter dem Begriff Schweißstiftspitze wird auch eine abgeflachte Spitze verstanden.

Die Abflachungen können sich von der Schulter bis zur Schweißstiftspitze erstrecken und reduzieren das Drehmoment, das für eine Drehung der Schweißstiftspitze im Werkstückmaterial notwendig ist.

Der Auslauf der Wendelnut in einem konischen Flächenabschnitt der Mantelfläche des Schweißstifts kann verhindern bzw. vermindern, dass plastifiziertes Material über den konischen Flächenabschnitt, in dem die Wendelnut ausläuft, in Richtung der in Drehrichtung des Rührreibschweißwerkzeugs vorauslaufenden Abflachung hinausläuft und sich im diesem Bereich aufstaut oder von Schweißstift weg entlang der Schulter nach außen und damit weg von einer Zone verdrängt wird, in der das plastifizierte Material durchmischt werden soll, was insgesamt zu einer verminderten Materialbewegung und Durchmischung und schließlich zu Verdichtungsfehlern und/oder Tunnelbildungen in der Schweißnaht führen kann. Der Auslauf der Wendelnut in einem konischen Flächenabschnitt begünstigt stattdessen eine Verdrängung bzw. Förderung des plastifizierten Materials entlang der Wendelnut und entlang des Schweißstifts von der Schulter in Richtung Schweißstiftspitze und somit hin zu einer Durchmischungszone, wodurch insgesamt eine konstante Materialförderung und gute Durchmischung des plastifizierten Materials gewährleistet werden kann. Schließlich lassen sich mit dem Rührreibschweißwerkzeug beim Rührreibschweißen Schweißnähte ausbilden, die Verdichtungsfehler und Tunnelbildungen vermeiden.

In einer weiteren Ausführungsform grenzt der Auslauf der Wendelnut an eine dem konischen Flächenabschnitt nächstliegende Abflachung an.

Wenn der Auslauf der Wendelnut an eine dem konischen Flächenabschnitt nächstliegende Abflachung angrenzt, erstreckt sich die Wendelnut im Wesentlichen über die gesamte Breite des konischen Flächenabschnitts. Versuche haben gezeigt, dass eine derartige Ausgestaltung für eine besonders gute Materialmitnahme durch die Wendelnut in Richtung der Schweißstiftspitze sorgt. Dabei kann das plastifizierte Material insbesondere über die Nutflanken, die sich im Wesentlichen über die gesamte Breite des konischen Flächenabschnitts erstrecken, erfasst und verdrängt werden. Insgesamt ergibt sich eine sehr gute Materialdurchmischung, wodurch Verdichtungsfehler und Tunnelbildungen in der Schweißnaht vermieden werden.

In dem konischen Flächenabschnitt kann das durch eine vorgegebene Breite und Tiefe definierte Nutprofil der Wendelnut bis zum Auslauf, in dem sich die Breite und Tiefe verringern, voll ausgeprägt sein.

Mit anderen Worten kann der gesamte Auslauf der Wendelnut, in dem sich die Breite und Tiefe der Wendelnut verringern, in dem konischen Flächenabschnitt ausgebildet sein.

Durch diese Ausgestaltung der Wendelnut, insbesondere des Auslaufs der Wendelnut, kann plastifiziertes Material besonders effizient vom Auslauf der Wendelnut erfasst werden, um entlang der Wendelnut verdrängt und in Richtung Schweißstiftspitze gefördert zu werden. Schließlich ergibt sich eine sehr gute Materialdurchmischung, wodurch Verdichtungsfehler und Tunnelbildungen in der Schweißnaht vermieden werden.

In einer weiteren Ausführungsform beträgt der Umlaufwinkel der Wendelnut von der Schweißstiftspitze bis zum Auslauf der Wendelnut größer-gleich 360°, liegt vorzugsweise in einem Bereich größer-gleich 360° bis kleiner-gleich 720°.

Gemäß dieser Ausgestaltung wendelt sich die Wendelnut zwischen einem Mal und zwei Mal um den Schweißstift herum. In Verbindung mit einem Schweißstift gängiger Größe, der einer von der Schulter bis zur Schweißstiftspitze gemessene axiale Länge zwischen 2,5 mm und 3 mm, vorzugsweise 2,75 mm, haben kann, kann das Wendelnutprofil, d.h. die Nutbreite, die Nuttiefe, sowie eine Steigung der Wendelung, vorteilhaft so gewählt werden, dass sich die Wendelnut einerseits von der Schweißstiftspitze möglichst nahe an die Schulter heranerstreckt und anderseits die Wendelnut einen großen Anteil der der Mantelfläche des Schweißstifts bildet. Gemäß einer solchen Konfiguration kann das plastifizierte Material mit relativ wenig Umdrehungen um den Schweißstift herum von der Schulter bis zur Schweißstiftspitze verdrängt werden und effizient durchmischt werden. Beispielsweise kann die Nuttiefe zwischen 0,5 mm und 0,7 mm, vorzugsweise 0,6 mm, und die Steigung der Wendelung zwischen 1 mm und 1,5 mm, vorzugsweise 1,25 mm, betragen. Ein Flankenwinkel der Wendelnut kann zwischen 55° und 65°, vorzugsweise 60°, betragen.

Die Schulter kann durch eine Spiralnut profiliert sein, die sich von einem radial äußeren Bereich der Schulter in Richtung des Schweißstifts erstreckt und an eine Abflachung angrenzend ausläuft.

Die Spiralnut, die auch als Scroll bezeichnet werden kann, kann einerseits ein seitliches Herauspressen von Material einschränken oder verhindern und aufgrund der größeren Oberfläche einen größeren Wärmeeintrag bereitstellen. Des Weiteren kann die Spiralnut aktiv plastifiziertes Material von einem radial äußeren Bereich der Schulter in Richtung des Schweißstifts verdrängen und schließlich die Materialdurchmischung fördern. Versuche haben gezeigt, dass die Materialdurchmischung besonders gut gelingt, wenn die Spiralnut an eine Abflachung des Schweißstifts angrenzend ausläuft. Dadurch lässt sich vermeiden, dass am Schweißstiftfuß Bereiche entstehen, in denen eine Durchmischung von plastifiziertem Material nicht oder nur geringfügig stattfindet. Schließlich können Verdichtungsfehler und Tunnelbildungen in der Schweißnaht vermieden werden.

Eine Spiralisierung, d.h. ein Drehsinn, der Spiralnut kann wie die Wendelung der Wendelnut so an die Drehrichtung des Rührreibschweißwerkzeug angepasst sein, dass die Spiralnut plastifiziertes Material von einem radial äußeren Bereich der Schulter in Richtung des Schweißstifts verdrängt bzw. fördert. Wenn das Rührreibschweißwerkzeug eine Drehrichtung nach rechts, d.h. von der Schweißstiftspitze in Richtung Schulter betrachtet eine Drehrichtung gegen den Uhrzeigersinn, hat, ist die Spiralnut so spiralisiert, dass sie von einem radial äußeren Bereich der Schulter im Uhrzeigersinn in Richtung des Schweißstifts läuft. Wenn das Rührreibschweißwerkzeug eine Drehrichtung nach links, d.h. von der Schweißstiftspitze in Richtung Schulter betrachtet eine Drehrichtung im Uhrzeigersinn, hat, ist die Spiralnut so spiralisiert, dass sie von einem radial äußeren Bereich der Schulter gegen den Uhrzeigersinn in Richtung des Schweißstifts läuft.

Der Auslauf der Spiralnut kann die Abflachung kontaktieren. Auf diese Weise kann das von der Spiralnut verdrängte plastifizierte Material direkt an den Fuß des Schweißstifts gefördert werden. Dadurch lässt sich besonders gut vermeiden, dass am Schweißstiftfuß Bereiche entstehen, in denen eine Durchmischung von plastifiziertem Material nicht oder nur geringfügig stattfindet. Schließlich können Verdichtungsfehler und Tunnelbildungen in der Schweißnaht vermieden werden.

In einer weiteren Ausführungsform kann die Spiralnut den an die Schulter angrenzenden Fußbereich der Abflachung umschließen.

Diese Ausgestaltung bewirkt, dass ein möglichst großer Bereich der Schulter durch die Spiralnut profiliert ist und die Spiralnut plastifiziertes Material effizient an den Fuß des Schweißstifts, insbesondere an den Fuß einer Abflachung, heranführen kann, wodurch die Materialdurchmischung und schließlich die Schweißnahtqualität verbessert werden kann. Vorteilhaft kann die die Abflachung umschließende Spiralnut sich bis in den Bereich des zur Abflachung nächstgelegenen konischen Flächenabschnitts hineinerstrecken, wobei der konische Flächenabschnitt derjenige der konischen Flächenabschnitte ist, in dem die Wendelnut des Schweißstifts ausläuft. Dadurch kann das plastifizierte Material besonders effizient durch die Spiralnut und die Wendelnut verdrängt bzw. gefördert und schließlich durchmischt werden.

Der Umlaufwinkel der Spiralnut von dem radial äußeren Bereich bis zum Auslauf der Spiralnut kann größer-gleich 360° betragen, vorzugsweise in einem Bereich größer-gleich 360° bis kleiner-gleich 1080° liegen.

Das Spiralnutprofil, d.h. die Nutbreite sowie eine Steigung der Spiralnut, kann vorteilhaft so gewählt werden, dass die Spiralnut einen möglichst großen Anteil der der Schulterfläche ausbildet. Somit kann ein seitliches Herauspressen von Material einschränkt oder verhindert werden, gleichzeitig aufgrund der im Vergleich zu einer Schulterfläche ohne Spiralnut größeren Oberfläche ein durch Reibung erzeugter größerer Wärmeeintrag bereitgestellt werden. Für ein Rührreibschweißwerkzeug, das einen Schulterdurchmesser von 14 mm aufweist, kann die Spiralnut einen halbkreisfömigen Nutquerschnitt mit einem Radius von 0,6 mm haben.

In einer weiteren Ausführungsform kann die Schulter in einer Ebene quer zur Drehachse liegen.

Insbesondere, wenn die Schulter profiliert ist, beispielsweise mit einer Spiralnut, kann verhindert werden, dass während des Rührreibschweißens Material seitlich von der Schulter herausgepresst wird und die Materialdurchmischung leidet. Die Schulter kann in einer Ebene quer zur Drehachse liegen und ist einfach herstellbar. Eine zusätzliche Bearbeitung der Schulter, beispielsweise um eine Konkavität auszubilden, die seitliches Herauspressen von Material vermeiden oder verhindern kann, entfällt.

Die Schulter kann außenumfangsseitig eine Fase aufweisen.

Die Schulter des Rührreibschweißwerkzeugs ist neben dem Schweißstift der am stärksten belastete Teil des Werkzeugs, der während des Schweißprozesses in direktem Kontakt mit den Werkstücken steht, um Reibungswärme zu erzeugen und das Werkstückmaterial zu plastifizieren. Die an der Schulter außenumfangsseitig ausgebildete Fase erhöht die Werkzeugstabilität in diesem stark belasteten Bereich und trägt zu einer hohen Werkzeugstandzeit bei.

Die Schweißstiftspitze kann flach sein.

Eine flache Schweißstiftspitze bietet im Vergleich zu einer beispielsweise konusförmig spitz zulaufenden Schweißstiftspitze durch eine verminderte Eindringtiefe insbesondere beim Verschweißen von dünnen Bauteilen den Vorteil einer guten Kontrolle der Schweißnahtgeometrie. Eine flache Schweißstiftspitze bewegt das Material vorwiegend seitlich und nicht nach unten. Dies minimiert die Gefahr von Materialanhäufungen und ungleichmäßigen Schweißnahtprofilen.

In einer weiteren Ausführungsform weist der Schweißstift drei konische Flächenabschnitte mit dazwischenliegenden Abflachungen auf.

Die drei Abflachungen können sich jeweils von der Schulter bis zur Schweißstiftspitze erstrecken und reduzieren das Drehmoment, das für eine Drehung der Schweißstiftspitze im Werkstückmaterial notwendig ist. Die drei Abflachungen können gleichverteilt in einem Winkelabstand von jeweils 120° um die Werkzeugdrehachse herum angeordnet sein. Die Kanten der Abflachungen wirken als zusätzliche Reibungszonen, was zu einer lokal erhöhten Wärmeerzeugung führt. Dies kann insbesondere bei hochfesten Werkstoffen vorteilhaft sein, um eine gute Plastifizierung des Werkstückmaterials zu gewährleisten.

In einer weiteren Ausführungsform kann die Wendelnut von der Schweißstiftspitze bis zu ihrem Auslauf in dem konischen Flächenabschnitt durchgängig ausgebildet sein.

Mit anderen Worten kann die Wendelnut sowohl in den konischen Flächenabschnitten als auch in den Abflachungen ausgebildet sein. Die durchgängige Wendelnut, insbesondere deren Nutflanken, sorgt für einen stabilen und konstanten Materialfluss von der Schulter in Richtung Schweißstiftspitze und gleichzeitig für eine gute Durchmischung des plastifizierten Materials.

Weitere Einzelheiten, Merkmale und Vorteile ergeben sich aus der nachfolgenden Beschreibung einer Ausführungsform und anhand der Zeichnungen. Es zeigen:
Fig. 1 eine Seitenansicht eines Rührreibschweißwerkzeugs einer Ausführungsform;
Fig. 2 eine Detailansicht eines Details A aus Fig. 1;
Fig. 3 eine Vorderansicht des Rührreibschweißwerkzeugs aus Fig. 1;
Fig. 4 eine Detailansicht eines Details B aus Fig. 3;
Fig. 5 eine Detailansicht eines Details C aus Fig. 3;
Fig. 6 eine Schnittansicht entlang einer Schnittlinie D-D aus Fig. 3; und
Fig. 7 eine weitere Vorderansicht des Rührreibschweißwerkzeugs aus Fig. 1.

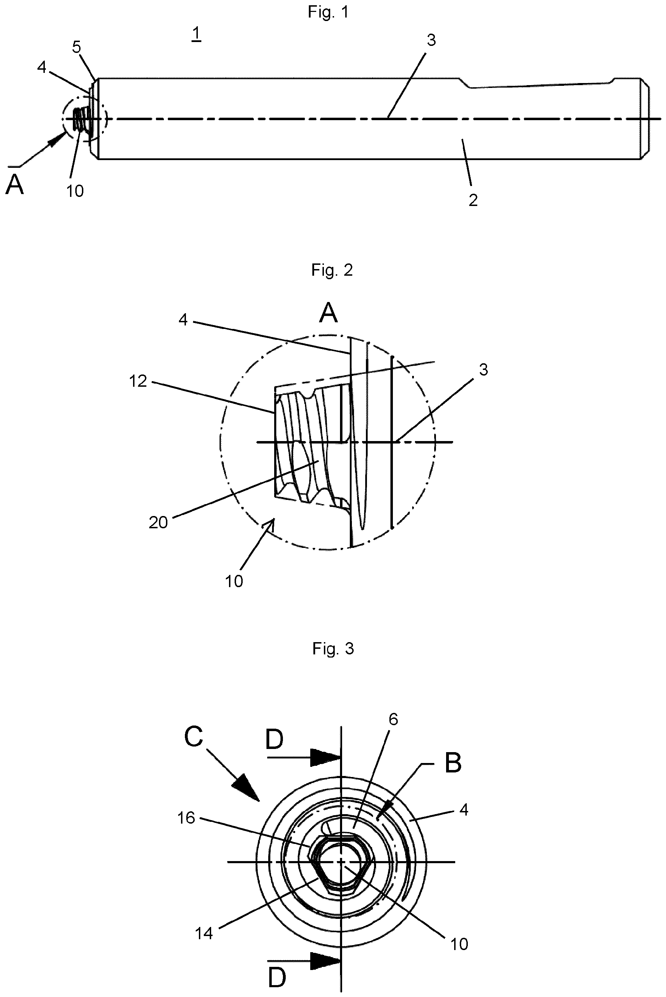

Die Figuren 1 bis 7 zeigen verschiedene Ansichten eines Rührreibschweißwerkzeugs 1 gemäß einer Ausführungsform. Das Rührreibschweißwerkzeug 1 weist einen sich entlang einer Drehachse 3 erstreckenden Grundkörper 2 auf. An seinem hinteren, in Fig. 1 rechten Ende, hat der Grundkörper 2 einen Spannabschnitt zum Einspannen in eine Werkzeugmaschinenspindel. An seinem vorderen, in Fig. 1 linken Ende, bildet der Grundkörper 2 eine Schulter 4 aus, die in einer Ebene quer zur Drehachse 3 liegt von der aus ein konisch verjüngter Schweißstift 10 vorspringt. Eine Drehachse des Schweißstifts 10 fällt mit der Drehachse 3 des Grundkörpers 2 zusammen. Außenumfangsseitig weist die Schulter 4 eine Fase 5 auf.

Das Rührreibschweißwerkzeugs 1 gemäß der Ausführungsform weist eine Drehrichtung nach links auf, d.h. das Rührreibschweißwerkzeugs 1 hat vom Schweißstift 10 in Richtung Schulter 4 und entlang der Drehachse 3 betrachtet eine Drehrichtung im Uhrzeigersinn.

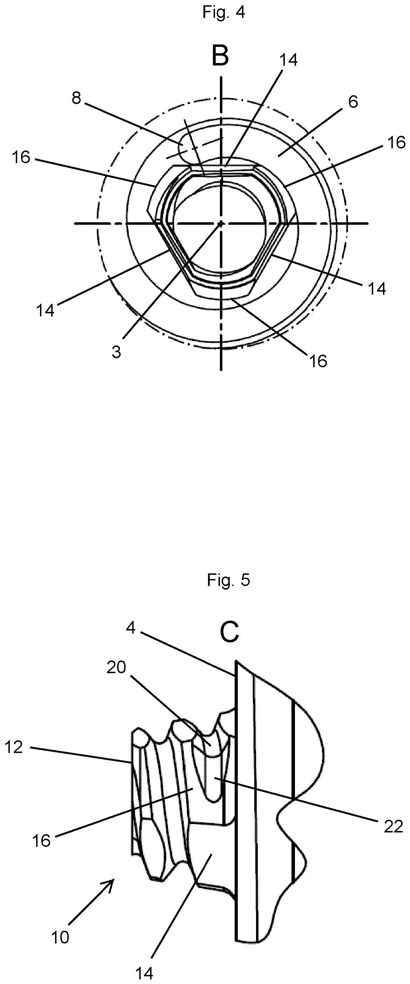

Fig. 2 ist eine Detailansicht eines Details A aus Fig. 1 und stellt den Schweißstift 10 in einer vergrößerten Ansicht dar. Der Schweißstift 10 weist eine flache Schweißstiftspitze 12 auf. Wie in den Fig. 3 und 4 zu sehen, ist eine Mantelfläche des Schweißstifts 10 durch abwechselnde konische Flächenabschnitte 16 und Abflachungen 14 profiliert. Insbesondere weist der Schweißstift 10 drei konische Flächenabschnitte16 mit dazwischenliegenden Abflachungen 14 auf. Die drei Abflachungen 14 erstrecken sich jeweils von der Schulter 4 bis zur Schweißstiftspitze 12 und reduzieren das Drehmoment, das für eine Drehung des Schweißstifts 10 im Werkstückmaterial notwendig ist. Die drei Abflachungen 14 sind gleichverteilt in einem Winkelabstand von jeweils 120° um die Drehachse 3 herum angeordnet.

Eine rechtsgewendelte oder rechtsgängige Wendelnut 20 wendelt sich von der Schweißstiftspitze 12 in Richtung Schulter 4 im Uhrzeigersinn um den Schweißstift 10 herum. Die zur Drehrichtung des Rührreibschweißwerkzeugs 1 gegensinnig gewendelte Wendelnut 20 erzeugt während des Rührreibschweißens eine Bewegung von plastifiziertem Material von der Schulter 4 in Richtung Schweißstiftspitze 12.

Wie in Fig. 5 gezeigt ist, erstreckt sich die Wendelnut 20 möglichst nahe an die Schulter 4 heran. Des Weiteren läuft die Wendelnut 20 in einem konischen Flächenabschnitt 16 aus. Der Auslauf 22 der Wendelnut 20 ist derjenige Bereich, innerhalb dessen sich die Tiefe und Breite der Wendelnut 20 verringert. Der Auslauf 22 der Wendelnut 20 in einem konischen Flächenabschnitt 16 der Mantelfläche des Schweißstifts 10 kann verhindern bzw. vermindern, dass plastifiziertes Material über den konischen Flächenabschnitt 16, in dem die Wendelnut 20 ausläuft, in Richtung der in Drehrichtung des Rührreibschweißwerkzeugs 1 vorauslaufenden Abflachung, die in Fig. 5 mit dem Bezugszeichen 14 gekennzeichnet ist, hinausläuft und sich im diesem Bereich aufstaut oder von Schweißstift 10 weg entlang der Schulter 4 nach außen und damit weg von einer Zone verdrängt wird, in der das plastifizierte Material durchmischt werden soll. Der Auslauf 22 der Wendelnut 20 in einem konischen Flächenabschnitt 16 begünstigt stattdessen eine Verdrängung bzw. Förderung des plastifizierten Materials entlang der Wendelnut 20 und entlang des Schweißstifts 10 von der Schulter 4 in Richtung Schweißstiftspitze 12 und somit hin zu einer Durchmischungszone, wodurch insgesamt eine konstante Materialförderung und gute Durchmischung des plastifizierten Materials gewährleistet werden kann.

Wie des Weiteren in Fig. 5 zu sehen ist, grenzt der Auslauf 22 der Wendelnut 20 an eine dem konischen Flächenabschnitt 16 nächstliegende Abflachung, die in Fig. 5 mit dem Bezugszeichen 14 gekennzeichnet ist, an. Die Wendelnut 20 erstreckt sich damit fast über die gesamte Breite des konischen Flächenabschnitts 16. In dem konischen Flächenabschnitt 16, in dem der Auslauf 22 liegt, ist das durch eine vorgegebene Breite und Tiefe definierte Nutprofil der Wendelnut 20 bis zum Auslauf 22, in dem sich die Breite und Tiefe verringern, voll ausgeprägt. Mit anderen Worten ist der gesamte Auslauf 22 der Wendelnut in dem konischen Flächenabschnitt 16 ausgebildet.

Die Wendelnut 20 ist von der Schweißstiftspitze 12 bis zu ihrem Auslauf 22 in dem konischen Flächenabschnitt 16 durchgängig ausgebildet. Das heißt, dass die Wendelnut 20 sowohl in den drei konischen Flächenabschnitten 16 als auch in den drei Abflachungen 14 ausgebildet ist. Die durchgängige Wendelnut 20, insbesondere deren Nutflanken, sorgt für einen stabilen und konstanten Materialfluss von der Schulter 4 in Richtung Schweißstiftspitze 12 und gleichzeitig für eine gute Durchmischung des plastifizierten Materials.

Wie in den Fig. 3, 4 und 7 gezeigt ist, ist die Schulter 4 durch eine Spiralnut 6, die auch als Scroll bezeichnet werden kann, profiliert. Die Spiralnut 6 erstreckt sich von einem radial äußeren Bereich der Schulter 4 in Richtung des Schweißstifts 10 und läuft an einer Abflachung 14 angrenzend aus. Die Spiralnut 6 kann einerseits ein von der Schulter 4 seitliches Herauspressen von Material einschränken oder verhindern und aufgrund der im Vergleich zu einer flachen Schulter größeren Oberfläche einen größeren Wärmeeintrag durch Reibung bereitstellen. Des Weiteren kann die Spiralnut 6 aktiv plastifiziertes Material von einem radial äußeren Bereich der Schulter 4 in Richtung des Schweißstifts 10 verdrängen und schließlich die Materialdurchmischung fördern.

In der gezeigten Ausführungsform kontaktiert der Auslauf 8 der Spiralnut 6 die Abflachung 14. Auf diese Weise kann das von der Spiralnut 6 verdrängte plastifizierte Material direkt an den Fuß des Schweißstifts 10 gefördert werden. Dadurch lässt sich besonders gut vermeiden, dass am Schweißstiftfuß Bereiche entstehen, in denen eine Durchmischung von plastifiziertem Material nicht oder nur geringfügig stattfindet. Insbesondere umschließt die Spiralnut 6 den an die Schulter 4 angrenzenden Fußbereich der Abflachung 14. Diese Ausgestaltung ermöglicht, dass ein möglichst großer Bereich der Schulter 4 durch die Spiralnut profiliert ist und die Spiralnut 6 plastifiziertes Material effizient an den Fuß des Schweißstifts 10, insbesondere an den Fuß einer Abflachung 14, heranführen kann, wodurch die Materialdurchmischung und schließlich die Schweißnahtqualität verbessert werden kann.

### Bezugszeichenliste

- 1: Rührreibschweißwerkzeug
- 2: Grundkörper
- 3: Drehachse
- 4: Schulter
- 5: Fase
- 6: Spiralnut
- 8: Auslauf
- 10: Schweißstift
- 12: Schweißstiftspitze
- 14: Abflachung
- 16: konischer Flächenabschnitt
- 20: Wendelnut
- 22: Auslauf

## Patentansprüche

1. Rührreibschweißwerkzeug (1), das eine vorgegebene Drehrichtung hat und einen sich entlang einer Drehachse (3) erstreckenden Grundkörper (2) und einen von einer Schulter (4) am Grundkörper (2) axial vorspringenden konisch verjüngten Schweißstift (10) aufweist, dessen Mantelfläche durch abwechselnde konische Flächenabschnitte (16) und Abflachungen (14) und durch eine von einer Schweißstiftspitze (12) in Richtung der Schulter (4) mit einer zur Drehrichtung gegensinnig gewendelten Wendelnut (20) profiliert ist, **dadurch gekennzeichnet, dass**
die Wendelnut (20) in einem konischen Flächenabschnitt der Mantelfläche des Schweißstifts (10) ausläuft.

2. Rührreibschweißwerkzeug (1) nach Anspruch 1, wobei der Auslauf (22) der Wendelnut (20) an eine dem konischen Flächenabschnitt (16) nächstliegende Abflachung (14) angrenzt.

3. Rührreibschweißwerkzeug (1) nach Anspruch 1 oder 2, wobei in dem konischen Flächenabschnitt (16) das durch eine vorgegebene Breite und Tiefe definierte Nutprofil der Wendelnut (20) bis zum Auslauf (22), in dem sich die Breite und Tiefe verringern, voll ausgeprägt ist.

4. Rührreibschweißwerkzeug (1) nach einem der vorhergehenden Ansprüche, wobei der Umlaufwinkel der Wendelnut (20) von der Schweißstiftspitze (12) bis zum Auslauf (22) der Wendelnut (20) größer-gleich 360° beträgt, vorzugsweise in einem Bereich größer-gleich 360° bis kleiner-gleich 720° liegt.

5. Rührreibschweißwerkzeug (1) nach einem der vorhergehenden Ansprüche, wobei die Schulter (4) durch eine Spiralnut (6) profiliert ist, die sich von einem radial äußeren Bereich der Schulter (4) in Richtung des Schweißstifts (10) erstreckt und an eine Abflachung (14) angrenzend ausläuft.

6. Rührreibschweißwerkzeug (1) nach Anspruch 5, wobei der Auslauf (8) der Spiralnut (6) die Abflachung (14) kontaktiert.

7. Rührreibschweißwerkzeug (1) nach Anspruch 5 oder 6, wobei die Spiralnut (6) den an die Schulter (4) angrenzenden Fußbereich der Abflachung (14) umschließt.

8. Rührreibschweißwerkzeug (1) nach Anspruch 5 bis 7, wobei der Umlaufwinkel der Spiralnut (6) von dem radial äußeren Bereich bis zum Auslauf (8) der Spiralnut (6) größer-gleich 360° beträgt, vorzugsweise in einem Bereich größer-gleich 360° bis kleiner-gleich 1080° liegt.

9. Rührreibschweißwerkzeug (1) nach einem der vorhergehenden Ansprüche, wobei die Schulter (4) in einer Ebene quer zur Drehachse (3) liegt.

10. Rührreibschweißwerkzeug (1) nach einem der vorhergehenden Ansprüche, wobei die Schulter (4) außenumfangsseitig eine Fase (5) aufweist.

11. Rührreibschweißwerkzeug (1) nach einem der vorhergehenden Ansprüche, wobei die Schweißstiftspitze (12) flach ist.

12. Rührreibschweißwerkzeug (1) nach einem der vorhergehenden Ansprüche, wobei der Schweißstift (10) drei konische Flächenabschnitte (16) mit dazwischenliegenden Abflachungen (14) aufweist.

13. Rührreibschweißwerkzeug (1) nach einem der vorhergehenden Ansprüche, wobei die Wendelnut (20) von der Schweißstiftspitze (12) bis zu ihrem Auslauf (22) in dem konischen Flächenabschnitt (16) durchgängig ausgebildet ist.
